**Europäisches Patentamt**

**European Patent Office**

**Office européen des brevets**

(11) Veröffentlichungsnummer : **0 191 500 B2**

(12) **NEUE EUROPÄISCHE PATENTSCHRIFT**

(45) Veröffentlichungstag der neuen Patentschrift :
**11.11.92 Patentblatt 92/46**

(21) Anmeldenummer : **86101904.0**

(22) Anmeldetag : **14.02.86**

(51) Int. Cl.⁵ : **A61C 19/00**

(30) Priorität : **15.02.85 DE 8504351 U**

(43) Veröffentlichungstag der Anmeldung :
**20.08.86 Patentblatt 86/34**

(45) Bekanntmachung des Hinweises auf die
Patenterteilung :
**29.11.89 Patentblatt 89/48**

(45) Bekanntmachung des Hinweises auf die
Entscheidung über den Einspruch :
**11.11.92 Patentblatt 92/46**

(84) Benannte Vertragsstaaten :
**AT BE CH DE FR GB IT LI LU NL SE**

(56) Entgegenhaltungen :
**EP-A- 0 125 558**
**DE-A- 2 145 921**

(54) **Lichtleiter.**

(56) Entgegenhaltungen :
**DE-A- 2 517 129**
**DE-U- 7 821 507**
**FR-A- 1 294 549**
**FR-A- 2 344 785**
**US-A- 2 428 975**
**US-A- 3 825 319**
**US-A- 4 317 615**
**US-A- 4 445 858**

(73) Patentinhaber : **ESPE Stiftung & Co**
**Produktions- und Vertriebs KG**
**Am Griesberg 2**
**W-8031 Seefeld (DE)**

(72) Erfinder : **Herold, Wolf-Dietrich**
**Hoehenweg 13**
**W-8031 Seefeld 2 (DE)**

(74) Vertreter : **Strehl, Schübel-Hopf, Groening**
**Maximilianstrasse 54 Postfach 22 14 55**
**W-8000 München 22 (DE)**

EP 0 191 500 B2

Jouve, 18, rue Saint-Denis, 75001 PARIS

## Beschreibung

Die Erfindung betrifft einen Lichtleiter der im Oberbegriff des Anspruchs 1 angegebenen Gattung für Bestrahlungsgeräte, wie sie insbesondere im Dentalbereich zum Bestrahlen von Zahnflächen im Munde des Patienten verwendet werden. Der Lichtleiter hat dabei die Aufgabe, die Strahlung einer Strahlungsquelle, die in dem von der Bedienungsperson in der Hand gehaltenen Bestrahlungsgerät angeordnet ist, auf den Bestrahlungsort zu richten.

Aus dem DE-U-78 21 507 ist ein Lichtleiter der eingangs bezeichneten Gattung bekannt, der zum Aushärten von Kunststoff-Zahnfüllungen mittels UV-Strahlung dient. Für diesen Zweck reicht ein am Austrittsende des Lichtleiters zur Verfügung stehendes paralleles Strahlenbündel mit einem Durchmesser von beispielsweise 8 mm aus.

Der bekannte Lichtleiter ist als kreiszylindrischer Stab ausgeführt, der in seinem vorderen Teil mit verhältnismässig grossem Krümmungsradius derart gekrümmt ist, dass seine Austrittsfläche gegenüber der Eintrittsfläche um einen Winkel um etwa 50° geneigt ist. Diese Form ist geeignet, um die flächenmässig begrenzten Zahnfüllungen mit der zur Aushärtung erforderlichen Strahlungsdosis zu beaufschlagen.

Anders liegen die Verhältnisse beim Versiegeln grösserer Zahnflächen, insbesondere der Okklusionsflächen, mit photopolymerisierbaren Kunststoffen, wo es zur gleichmässigen Bestrahlung wichtig ist, dass die Strahlungs-Austrittsfläche des Lichtleiters etwa parallel zu der zu bestrahlenden Fläche gehalten wird. Versucht man dazu, bei dem bekannten Lichtleiter den Querschnitt zu vergrössern, so wird er nicht nur durch diese Massnahme selbst unhandlich, sondern auch durch die Tatsache, dass mit grösserem Lichtleiterdurchmesser auch der Krümmungsradius grösser gemacht werden muss, um in dem gekrümmten Bereich die zur Vermeidung von Strahlungsverlusten erforderliche Totalreflexion zu erzielen. Würde man ferner versuchen, den gekrümmten Bereich eines solchen Lichtleiters über einen Winkel von etwa 90° zu führen, wie es für die Bestrahlung okklusaler Zahnflächen zweckmässig ist, so ergäbe sich wegen des grossen Krümmungsradius eine so ungünstige Form, dass sich der Lichtleiter kaum noch in den Mund eines Patienten, noch weniger wenn es sich dabei um ein Kind handelt, einführen liesse.

Aus der EP-A2-0125 558 ist ferner eine Bestrahlungsvorrichtung zum Aushärten von Zahnfüllungen bekannt, bei der versucht wird, ein von einer Lampe erzeugtes paralleles Strahlenbündel mit Hilfe einer hohlen, kegelstumpfförmigen, innen verspiegelten Hülse an deren Ausgang zu einem wenig divergenten Strahlenbündel mit geringerer Querschnittsfläche zu kondensieren, um mit der dadurch erreichten höheren Intensität eine grössere Aushärttiefe zu erreichen. Die genannte Hülse muss an ihrem Lichteintrittsende eine genügend grosse Öffnung aufweisen, um das gesamte von der Lampe erzeugte parallele Strahlenbündel aufzunehmen. Die Austrittsöffnung der Hülse muss genügend klein sein, um die gewünschte Kondensierung des Strahlenbündels zu erreichen. Gleichzeitig muss der Konuswinkel der Hülse sehr klein sein, damit der Divergenzwinkel des austretenden Strahlenbündels, der doppelt so gross ist wie der Konuswinkel der Hülse, auf dem gewünschten kleinen Wert gehalten wird, und damit Mehrfachbrechungen der Strahlen, die den Divergenzwinkel vervielfachen würden, vermieden werden. Diese Bedingungen führen dazu, dass die Hülse gross und unhandlich wird. Ausserdem lässt sich nachweisen, dass sich mit der bekannten Vorrichtung in der Praxis die Aushärttiefe nicht erhöhen lässt.

Aus der US-A-3 825 319 ist ferner ein Lichtleiter bekannt, dessen Querschnitt in einem zwischen Eintritts- und Austrittsende gelegenen mittleren Bereich verjüngt ist. Bei dem bekannten Lichtleiter handelt es sich um eine optische Faser zur Nachrichtenübertragung mit einem typischen Durchmesser von 2 bis 6 μm, wobei die Verjüngung dazu dienen soll, beim Aneinanderfügen von einzelnen Faserabschnitten Verluste durch Fluchtungsfehler zu verringern.

Aus der US-A-2 428 975 ist ein beleuchteter Dentalspiegel bekannt, bei dem das Licht einer im Handgriff untergebrachten Lampe über einen Lichtleiter zum Arbeitsende des Instruments, an dem der Spiegel vorgesehen ist, übertragen wird. Der Lichtleiter weist über seine gesamte Länge konstanten Querschnitt auf und ist lediglich an dem in den Handgriff eingeführten Ende auf dessen Durchmesser, sowie an der Spitze, in die der Spiegel eingebettet ist, auf dessen Form erweitert.

Der Erfindung liegt die Aufgabe zugrunde, einen Lichtleiter insbesondere für Dentalzwecke derart zu gestalten, dass er eine möglichst gleichmässige Bestrahlung grösserer Flächen bei einer für die Handhabung günstigen Form gestattet.

Die erfindungsgemässe Lösung dieser Aufgabe ist im kennzeichnenden Teil des Anspruchs 1 angegeben. Die danach vorgesehene Querschnittsverjüngung des Lichtleiters vom Strahlungseintrittsende zu einer Zwischenstelle hin und die anschliessende Querschnittserweiterung zum Strahlungsaustrittsende hin ergeben eine Art «Vermischungseffekt», wobei die einzelnen Strahlen eines am Eintrittsende divergenten Strahlenbündels durch Mehrfachbrechung innerhalb des Lichtleiters derart geführt werden, dass an der verhältnismässig grösseren Austrittsfläche die Strahlung mit gut homogener Intensität austritt. Der genannte «Vermischungseffekt» beruht darauf, dass die von der Strahlungsquelle ausgehende, am Eintrittsende des Lichtleiters divergente Strahlung in dem zunächst sich verjüngenden Teil des Lichtleiters zunehmend steiler reflektiert wird, so dass die Divergenz zunächst erhöht wird, in dem anschliessenden sich erweiternden Abschnitt des Lichtleiters dagegen die Divergenz des Strahlenbündels wieder teilweise beseitigt wird. Bei der praktischen Anwendung hat sich gezeigt, dass das austretende Strahlenbündel beim Aushärten von entsprechenden Kunststoffen zu einem sehr gleichmässigen geraden Aushärtungsprofil führt, d.h. die Aushärtungstiefe über die gesamte Bestrahlungsfläche gleich ist. Eine derartige gleichmässige Aushärtung über eine grössere Fläche ist insbesondere beim Versiegeln von Zahnflächen von Bedeutung, wo auf verhältnismässig grössere Flächen Kunststoffschichten in geringer Dicke aufgetragen werden.

Die Tatsache, dass der Lichtleiter zwischen dem sich verjüngenden und dem sich erweiternden Abschnitt einen gekrümmten Bereich aufweist, ist aus mehreren Gründen besonders vorteilhaft. Zum einen wird durch den gekrümmten Bereich der oben erwähnte «Vermischungseffekt» weiter erhöht, so dass sich eine weitere Vergleichmässigung der Strahlungsintensität über die Austrittsfläche erzielen lässt. Zum anderen wird es dadurch, dass sich die Krümmung im Bereich geringsten Querschnitts des Lichtleiters befindet, möglich, auch den Krümmungsradius entsprechend klein zu machen, ohne Strahlungsverluste in Kauf zu nehmen. Bei Anwendung im Dentalbereich zur Behandlung von Zahnflächen in situ führen sowohl der geringe Durchmesser des Lichtleiters als auch der kleine Krümmungsradius des gekrümmten Bereichs dazu, dass das in den Mund einzuführende vordere Ende des Lichtleiters entsprechend klein und handlich wird, selbst wenn die Krümmung über einen erheblichen Winkel führt. Der Winkel von 90° ist insofern besonders zweckmässig, als sich dann bei müheloser Handhabung des Bestrahlungsgerätes die Lichtaustrittsfläche mühelos flach auf okklusale Zahnflächen aufsetzen lässt.

Weitere, insbesondere für die Dentalpraxis geeignete Abmessungen sind in den Unteransprüchen 2 und 3 angegeben.

Die Unteransprüche 4 und 5 beziehen sich auf eine vorteilhafte Weiterbildung der Erfindung, bei der der Lichtleiter an seinem Austrittsende mit einem Filter versehen ist.

Wie aus den Unteransprüchen 6 und 7 ersichtlich ist, kann der Lichtleiter als Vollstab ausgebildet sein oder sich aus mehreren diskreten Lichtleitfasern zusammensetzen. Das Material für Vollstab oder Lichtleitfasern kann Glas, Quarz oder Kunststoff sein.

Ein bevorzugtes Ausführungsbeispiel der Erfindung wird nachstehend anhand der Zeichnung näher erläutert. In der Zeichnung zeigt

Figur 1 einen Längsschnitt durch einen Lichtleiter,

Figur 2 einen Querschnitt längs der Linie II-II der Figur 1, und

Figur 3 den vorderen Bereich des Lichtleiters in vergrösserter Darstellung.

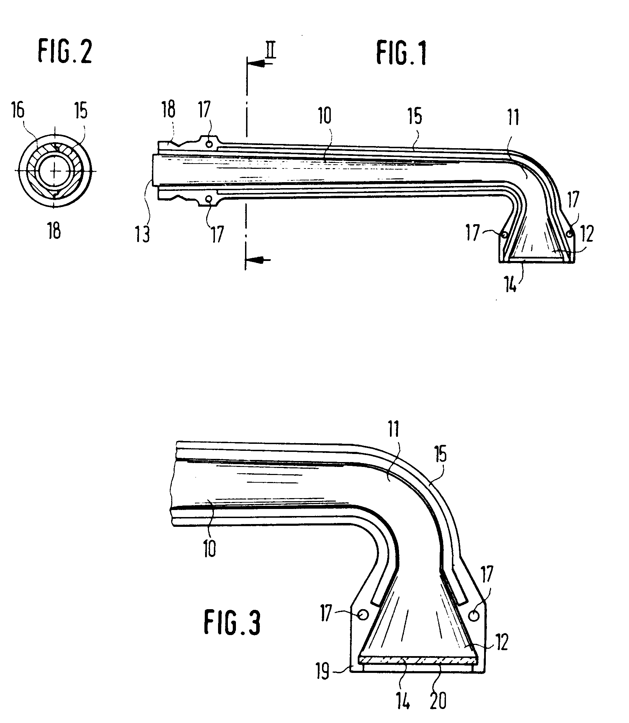

Gemäss Figur 1 weist der aus einem einstückigen Glas-, Quarz- oder Kunststoffstab bestehende Lichtleiter einen sich konisch verjüngenden Bereich 10 auf der an seinem vorderen Ende in einen gekrümmten Bereich 11 übergeht, der seinerseits an seinem vorderen Ende in einen sich konisch erweiternden Bereich 12 übergeht. Der Lichtleiter hat folgende Abmessungen:

Durchmesser des Bereichs 10 an seinem Strahlungs-Eintrittsende 13: ca. 8 mm.

Durchmesser des gekrümmten Teils: ca. 5 mm.

Durchmesser des Bereichs 12 am Strahlungs-Austrittsende 14: ca. 14 mm.

Länge des Bereichs 10: ca. 85 mm.

Bogenwinkel des gekrümmten Bereichs 11: 90°.

Krümmungsradius der Mittellinie oder optischen «Achse» des gekrümmten Bereichs: ca. 8,5 mm.

Länge des Bereichs 12: ca. 10 mm.

Der Lichtleiter ist von einer Schutzhülse umgeben, die aus zwei Halbschalen 15, 16 aufgebaut ist. Die Teilungsebene der Halbschalen liegt in der Zeichenebene der Figur 1, in der nur die hintere Halbschale 15 gezeigt ist. Die Halbschalen 15, 16 sind bezüglich ihren Innenwandungen derart gestaltet und dimensioniert, dass sie den Lichtleiter mit einem Luftspalt umgeben und nur an wenigen Punkten an diesem anliegen, um die Totalreflexion nicht zu beeinträchtigen.

Wie aus Figur 2 hervorgeht, greifen die beiden Halbschalen 15, 16 der Schutzhülse in der Teilungsebene mit gestuften Kanten übereinander, was nicht nur das Austreten von Strahlung an der Fuge verhindert, sondern auch - wegen der Krümmung - eine gegenseitige Verriegelung der beiden Halbschalen in Axialrichtung ergibt. Zur zusätzlichen Verbindung der beiden Halbschalen sind im hinteren und im vorderen Bereich jeweils ineinandergreifende Bohrungen bzw. Passstifte vorgesehen, wie sie bei 17 angedeutet sind.

Im Bereich des Eintrittsendes 13 bilden die beiden Halbschalen 15, 16 miteinander einen Ringflansch 18 mit einer Ringnut zum Einsetzen in das vordere Ende eines (nicht gezeigten) Bestrahlungsgerätes.

In dem in Figur 3 vergrössert dargestellten Bereich des Lichtaustrittsendes bilden die beiden Halbschalen 15, 16 miteinander einen nach innen weisenden Ringflansch 19, durch den eine Filterplatte 20 am Austrittsende 14 des Lichtleiters gehalten ist. Der über das Austrittsende in Axialrichtung hinausragende Ringflansch 19 bewirkt gleichzeitig, dass keinerlei Strahlung quer zur optischen Achse austreten kann, die die Bedienungsperson während der Arbeit stören würde.

In der obigen Beschreibung wurde die Erfindung anhand eines Lichtleiters für ein insbesondere dentales Bestrahlungsgerät erläutert. Die Erfindung beschränkt sich aber nicht auf dieses Gebiet. Lichtleiter nach der Erfindung sind auch auf anderen technischen Gebieten, z.B. für Bestrahlungsgeräte zum Aushärten von Klebern, einsetzbar.

**Patentansprüche**

1. Lichtleiter für ein insbesondere dentales Bestrahlungsgerät, mit einem an eine in dem Bestrahlungsgerät enthaltene Bestrahlungsquelle ankoppelbarem Eintrittsende (13), das einen Durchmesser von ca. 8 bis 12 mm hat, einem gekrümmten Zwischenbereich (11) und einer auf den Bestrahlungsort zu richtenden, quer zur optischen Achse stehenden Lichtaustrittsfläche (14), dadurch gekennzeichnet, daß sich der Lichtleiter in seinem Querschnitt vom Eintrittsende (13) kontinuierlich bis zu dem gekrümmten Zwischenbereich (11) konisch verjüngt und von dem Zwischenbereich (11) kontinuierlich bis zu der Lichtaustrittsfläche (14), an der er einen größeren Querschnitt hat als am Eintrittsende (13), wieder konisch erweitert, und daß der gekrümmte Bereich (11) über einen Winkel von etwa 90° verläuft und einen Durchmesser von etwa 4 bis etwa 6 mm, vorzugsweise etwa 5 mm, hat.

2. Lichtleiter nach Anspruch 1, dadurch gekennzeichnet, dass der Krümmungsradius seiner Mittellinie in dem gekrümmten Bereich (11) ca. 7 bis ca. 10 mm, vorzugsweise ca. 8,5 mm beträgt.

3. Lichtleiter nach Anspruch 1 oder 2, dadurch gekennzeichnet, dass er am Austrittsende (14) einen Durchmesser von ca. 10 bis ca. 20 mm, vorzugsweise ca. 14 mm hat.

4. Lichtleiter nach einem der Ansprüche 1 bis 3, dadurch gekennzeichnet, dass er an seinem Austrittsende (14) ein Filter (20) trägt.

5. Lichtleiter nach Anspruch 4, dadurch gekennzeichnet, dass das Filter (20) in einer den Lichtleiter umgebenden Schutzhülse (15, 16) gehaltert ist.

6. Lichtleiter nach einem der Ansprüche 1 bis 5, dadurch gekennzeichnet, dass er als Vollstab ausgebildet ist.

7. Lichtleiter nach einem der Ansprüche 1 bis 5 dadurch gekennzeichnet, dass er aus mehreren diskreten Lichtleitfasern aufgebaut ist.

**Claims**

1. A light conductor for an irradiation device, particularly for dental pursposes, comprising an entrance end (13) adapted to be coupled to a source of radiation contained in the irradiation device and having a diameter of about 8 to 12 mm, a curved intermediate portion (11) and a light exit surface (14) to be directed to the locus of irradiation and extending transversely of the optical axis, characterised in that the light conductor which, in its cross-section, continually and conically tapers from the entrance end (13) to the curved intermediate portion (11) and continually and conically flares out again from the intermediate portion (11) to the light exit surface (14) at which it has a larger cross-section than at the entrance end (13), and that the curved portion (11) extends through an angle of about 90° and has a diameter of about 4 to about 6 mm, preferably about 5 mm.

2. The light conductor of claim 1, characterised in that the radius of curvature of its center line in the curved portion (11) is about 7 to about 10 mm, preferably about 8.5 mm.

3. The light conductor of claim 1 or 2, characterised in that it has a diameter at its exit end (14) of about 10 to about 20 mm, preferably about 14 mm.

4. The light conductor of any one of claims 1 to 3, characterised in that it carries a filter (20) at its exit end (14).

5. The light conductor of claim 4, characterised in that the filter (20) is held in a protective sleeve (15, 16) surrounding the light conductor.

6. The light conductor of any one of claims 1 to 5, characterised in that it is formed as a solid rod.

7. The light conductor of any one of claims 1 to 5, characterised in that it is composed of a plurality of discrete light conducting fibres.

**Revendications**

1. Guide d'ondes optiques pour un appareil d'irradiation, en particulier dental, comprenant une extrémité d'entrée (13) d'un diamètre d'environ 8 à 12 mm pouvant être couplée avec une source de rayonnement contenue dans l'appareil d'irradiation, une section intermédiaire courbe (11) et une extrémité de sortie (14) perpendiculaire à l'axe optique et devant être dirigée vers l'endroit à irradier, caractérisé en ce que le guide d'ondes optiques se rétrécit en section transversale de manière conique de l'extrémité d'entrée (13) de façon continue jusqu'à la section intermédiaire courbe (11) et s'élargit à nouveau de manière conique de façon continue depuis la section intermédiaire (11) jusqu'à l'extrémité de sortie (14) où il possède une section transversale plus grande qu'à l'extrémité d'entrée (13), et que la section courbe (11) s'étend sur un angle d'environ 90° et présente un diamètre d'environ 4 à environ 6 mm, de préférence environ 5 mm.

2. Guide d'ondes optiques selon la revendication 1, caractérisé en ce que le rayon de courbure de son axe médian dans la section courbe (11) est d'environ 7 à environ 10 mm, de préférence environ 8,5 mm.

3. Guide d'ondes optiques selon la revendication 1 ou 2, caractérisé en ce qu'il présente à l'extrémité de sortie (14) un diamètre d'environ 10 à environ 20 mm, de préférence environ 14 mm.

4. Guide d'ondes optiques selon l'une des renvendications 1 à 3, caractérisé en ce qu'il est équipé à son extrémité de sortie (14) d'un filtre (20).

5. Guide d'ondes optiques selon la revendication 4, caractérisé en ce que le filtre (20) est monté dans une gaine de protection (15,16) qui entoure le guide d'ondes optiques.

6. Guide d'ondes optiques selon l'une des revendications 1 à 5, caractérisé en ce qu'il est réalisé sous la forme d'une barre massive.

7. Guide d'ondes optiques selon l'une des revendications 1 à 5, caractérisé en ce qu'il est constitué d'une pluralité de fibres optiques discrètes.

EP 0 191 500 B2

FIG.2                    II        FIG.1

FIG.3

6